# EUROPÄISCHE PATENTSCHRIFT

(11) **EP 3 113 278 B1**
(45) Veröffentlichungstag und Bekanntmachung des Hinweises auf die Patenterteilung: **10.01.2018**
(21) Anmeldenummer: 16001240.7
(22) Anmeldetag: 01.06.2016
(51) Int. Cl.: H01M 10/6555, H01M 10/613, H01M 10/625, H01M 2/10, H01M 10/647

(54) **KRAFTFAHRZEUGBATTERIE**
MOTOR VEHICLE BATTERY
BETTERIE POUR VEHICULE AUTOMOBILE

(30) Priorität: 03.07.2015 DE 102015008510
(43) Veröffentlichungstag der Anmeldung: 04.01.2017
(73) Patentinhaber: MAN Truck & Bus AG, 80995 München (DE)
(72) Erfinder: Braun, Reimar, 81735 München (DE)
(74) Vertreter: v. Bezold & Partner Patentanwälte - PartG mbB

(56) Entgegenhaltungen:
- DE-A1-102008 054 947
- DE-A1-102012 221 503
- DE-A1-102013 021 531
- US-A1- 2014 023 906

## Beschreibung

Die Erfindung betrifft eine Kraftfahrzeugbatterie nach dem Oberbegriff des Anspruchs 1.

Aus der Praxis bekannte Kraftfahrzeugbatterien, wie sie z. B. als Energiespeicher bzw. als Traktionsbatterie in Hybridfahrzeugen oder Elektrofahrzeugen zum Einsatz kommen, verfügen typischerweise über ein oder mehrere Batteriemodule, wobei jedes Batteriemodul mehrere stapelartig angeordnete Batteriezellen aufweist. Um einen ordnungsgemäßen Betrieb sicherzustellen und eine Beschädigung einer solchen Kraftfahrzeugbatterie zu vermeiden sowie um eine möglichst lange Lebensdauer zu erreichen, muss dieselbe in einem definierten Temperaturbereich betrieben werden. Hier ist es beispielsweise aus dem Stand der Technik bekannt, unterhalb des Batteriemoduls eine Kühlplatte anzuordnen, die von einem Kühlfluid durchströmt wird, um das Batteriemodul zu kühlen.

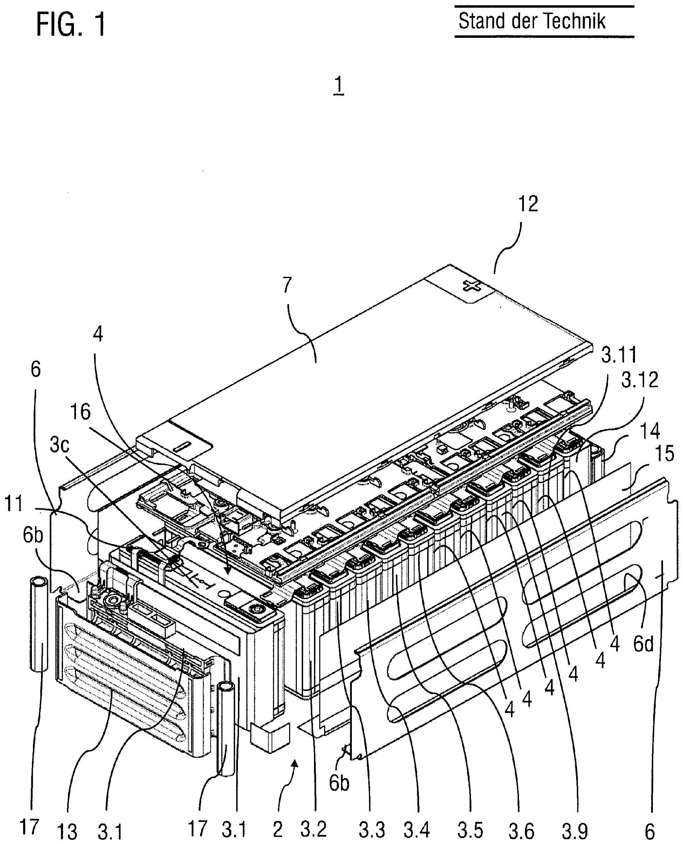

Eine derartige aus dem Stand der Technik bekannte Kraftfahrzeugbatterie ist in Figur 1 in einer perspektivischen Explosionsdarstellung gezeigt. Die Kraftfahrzeugbatterie 1 kann eine Hochleistungs- oder Hochvoltbatterie in Form einer Lithium-Ionen-Batterie sein, wie sie als Traktionsbatterien für zumindest teilweise elektrisch angetriebene Fahrzeuge eingesetzt werden.

Die Kraftfahrzeugbatterie 1, nachfolgend auch kurz als Batterie bezeichnet, besteht aus einem Batteriemodul 2, das mehrere stapelartig nebeneinander bzw. aufeinander angeordnete Batteriezellen 3 aufweist. In dem in Figur 1 gezeigten Beispiel sind dies zwölf Batteriezellen, die zur besseren Unterscheidung voneinander mit den Bezugszeichen 3.x gekennzeichnet sind, wobei "x" eine bestimmte Batteriezelle der zwölf Batteriezellen kennzeichnet. Die Batteriezellen sind in an sich bekannter Weise über an der Oberseite 3c der Batteriezellen angeordnete Zellverbinder parallel oder seriell verschaltet, so dass an der hinteren Zelle 3.12 der Pluspol 12 des Batteriemoduls 2 abgegriffen wird und an der ersten Batteriezelle 3.1 der Minuspol 11 des Batteriemoduls 2.

Auf dem Batteriemodul 2 ist eine Elektronikeinheit 16 angeordnet, die der Erfassung der Spannungen der einzelnen Batteriezellen 3 und zur Steuerung des Batteriebetriebs dient und ferner zum Ausgleich unterschiedlicher Ladungszustände der einzelnen Zellen 3 genutzt werden kann. Die Elektronikeinheit 16 wird auch als sogenanntes Balancing Board bezeichnet.

Die Kraftfahrzeugbatterie 1 umfasst ferner eine das Batteriemodul 2 umgebende Haltestruktur, die als Rahmenstruktur und/oder Gehäuse ausgeführt ist. Die Haltestruktur umfasst zwei Seitenteile 6, die parallel zu den Seitenwänden des Stapels aus Batteriezellen bzw. an gegenüberliegenden Seitenwänden des Batteriemoduls 2 angeordnet sind. Die Haltestruktur umfasst ferner einen auf der Elektronikeinheit 6 aufliegenden Deckel 7, ein vorderes Stirnteil 13, das an der vorderen Stirnseite des Batteriemoduls 2 am vorderen Endbereich der Seitenteile 6 anliegt, sowie ein korrespondierendes hinteres Stirnteil 14, das an der hinteren Stirnseite des Batteriemoduls 2 am hinteren Endbereich der Seitenteile 6 anliegt. Zwischen den Seitenteilen 6 und der Seitenwand des Batteriemoduls 2 ist noch eine Papierschicht 15 eingelegt, die eine mechanische Beschädigung, z. B. Zerkratzen der Batteriezellen, durch die Seitenteile 6 verhindern soll. Über vier Schrauben (nicht gezeigt), die in die an den vier Ecken der Haltestruktur vorgesehenen Schraubhülsen 17 eingreifen, wird das Zellmodul 2 mit der Haltestruktur verschraubt.

Die Haltestruktur verhindert eine zu starke Ausdehnung der Zellen bei der elektrischen Zyklisierung. Zur Gewichtsreduktion weisen die Seitenteile 6 ferner Ausnehmungen 6d auf. Zur Kühlung des Batteriemoduls 2 ist unterhalb des Batteriemoduls 2 eine Kühlplatte zur Ausbildung einer Bodenkühlung angeordnet, die in Figur 1 nicht gezeigt ist. Die im Betrieb in den Batteriezellen entstehende Wärme wird nach unten in die Kühlplatte geleitet. Zwischen der Kühlplatte und der Unterseite des Batteriemoduls 2 ist ferner ein Wärmeleitpad, auch als Gap-Pad bezeichnet, angeordnet, über das das Batteriemodul mit der Kühlplatte thermisch gekoppelt ist und das beim Verschrauben des Zellmoduls mit dem Gehäuse zusammengedrückt wird. Neben der thermischen Anbindung dient das Gap-Pad zum Ausgleich von Unebenheiten.

Die in Figur 1 gezeigte Kraftfahrzeugbatterie 1 ist für den Einsatz mit einem Personenkraftwagen (PKW) ausgelegt. Zur Erzielung von Kostenvorteilen, insbesondere von Skaleneffekten, wäre es wünschenswert, die Kraftfahrzeugbatterie 1 auch im Nutzfahrzeugbereich einzusetzen. Im Nutzfahrzeugbereich werden jedoch erhöhte Leistungsanforderungen an die Kraftfahrzeugbatterie gestellt. Im Rahmen der Erfindung wurde festgestellt, dass das bestehende Kühlkonzept zur Erfüllung der im Nutzfahrzeugbereich bestehenden erhöhten Leistungsanforderungen nicht ausreichend ist, da die Wärme der Batteriezellen 3 nicht ausreichend abgeführt wird. Demzufolge stellt sich ein relativ hoher Temperaturgradient von der Oberseite der Batteriezellen, d. h. der dem Deckel 7 zugewandten Seite, mit hohen Temperaturen zu deren Unterseite, d. h. der der Kühlplatte zugewandte Seite, mit kleineren Temperaturen ein.

Aus dem Stand der Technik ist es bekannt, dass das Ableiten von in den Batteriezellen entstehender Wärme mittels Kühlfinnen verbessert werden kann. So schlägt beispielsweise die Offenlegungsschrift DE 10 2012 218 764 A1 vor, jeweils eine Kühlfinne über einen flächigen Grundkörper thermisch mit der Seite einer Batteriezelle zu koppeln, wobei der Grundkörper einen Kühlkanal aufweist. Das zusätzliche Einbringen von Kühlfinnen würde jedoch die bestehenden Abmäße und den Aufbau der Kraftfahrzeugbatterie 1 stark ändern, was jedoch gerade aus Kostengründen vermieden werden soll. Ferner ist aus dem Stand der Technik bekannt, neben der Bodenkühlung eine zusätzliche Kopfkühlung oder Ableiterkühlung vorzusehen, was vorliegend wiederum eine signifikante Änderung an der Konstruktion des bestehenden Batteriemoduls 1 erfordern würde. Insbesondere bei einer Kopfkühlung müssen sehr strenge Dichtheitsanforderungen erfüllt werden, da die Kopfkühlung in der Nähe der stromführenden Teile der Elektronikeinheit 16 verlaufen würde.

Aus der DE 10 2008 054 947 A1 ist eine wiederaufladbare Batterie mit mindestens einer Wärmeleiteinrichtung zum innerhalb der Batterie erfolgenden Wärmetransfer mittels Wärmeleitung zwischen dem Batterieelement und einer Wärmetransporteinrichtung zum Kühlen der Batterie bekannt. Ferner ist eine Spannvorrichtung vorgesehen, die das Batterieelement und die Wärmeleiteinrichtung gegeneinander verspannt. Aus der DE 10 2013 021 531 A1 ist eine Batterie mit einer Mehrzahl von Einzelzellen bekannt, ferner aufweisend eine Temporiervorrichtung und eine Anzahl von Wärmeleitelementen zur thermischen Kopplung der Einzelzellen mit der Temporiervorrichtung. Hierbei ist das Wärmeleitelement zur thermischen Ankopplung von zwei Einzelzellen zwischen zwei unmittelbar benachbarten Einzelzellen angeordnet und weist zumindest ein elektrisches Isolationselement auf.

Es ist somit eine Aufgabe der Erfindung, eine Kraftfahrzeugbatterie mit verbesserter Kühlleistung bereitzustellen. Es ist insbesondere eine Aufgabe der Erfindung, die in Figur 1 beschriebene Kraftfahrzeugbatterie so weiterzubilden, dass eine verbesserte Kühlung des Batteriemoduls 2 ermöglicht wird, wobei der Grundaufbau der bisherigen Kraftfahrzeugbatterie möglichst beibehalten werden soll. Insbesondere sollen sich die Abmessungen, das sogenannte Package, des Batteriemoduls 2, nicht wesentlich ändern.

Diese Aufgaben werden durch eine Kraftfahrzeugbatterie mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße Kraftfahrzeugbatterie umfasst in an sich bekannter Weise ein Batteriemodul, das mehrere stapelartig nebeneinander angeordnete Batteriezellen aufweist. Die Kraftfahrzeugbatterie umfasst ferner eine das Batteriemodul umgebende Haltestruktur, aufweisend zwei Seitenteile, die parallel zu den Seitenwänden eines solchen Stapels aus Batteriezellen bzw. an gegenüberliegenden Seitenwänden des Batteriemoduls angeordnet sind. Ferner umfasst die Kraftfahrzeugbatterie einen unterhalb des Batteriemoduls angeordneten Kühlkörper, z. B. eine Kühlplatte, der vorzugsweise von einem Kühlfluid durchströmbar ist.

Ferner ist zwischen dem Kühlkörper und einer Unterseite des Batteriemoduls ein Wärmeleitpad angeordnet, das das Batteriemodul mit dem Kühlkörper thermisch koppelt. Das Wärmeleitpad dient ferner zum Ausgleich von Unebenheiten. Dieses Wärmeleitpad wird nachfolgend als erstes Wärmeleitpad bezeichnet, um es besser von einem nachfolgend noch zu beschreibenden zweiten Wärmeleitpad zu unterscheiden. Das Wärmeleitpad kann in an sich bekannter Weise ausgeführt sein. Derartige Wärmeleitpads werden auch als "Gap-Pads" bezeichnet. Ein Wärmeleitpad dient der besseren Ableitung der beim Betrieb des Batteriemoduls in den Batteriezellen entstehenden Wärme. Durch Einbringen eines Wärmeleitpads bei der Montage des Batteriemoduls auf den Kühlkörpern können durch Unebenheiten entstehende Lufträume, die den Wärmeübergang stark behindern, vermieden werden, da das Wärmeleitpad die Luft aus diesen Zwischenräumen verdrängt und so den Wärmeübergang zwischen Batteriemodul und Kühlkörper bzw. Kühlplatte verbessert.

Gemäß allgemeinen Gesichtspunkten der Erfindung ist in mindestens einem der zwischen zwei benachbarten Batteriezellen ausgebildeten Zwischenbereiche ein wärmeleitfähiges Element angeordnet, das sich aus dem Zwischenbereich heraus bis zu zumindest einem der Seitenteile der Haltestruktur erstreckt und an diesem thermisch kontaktiert ist. Das Verbindungselement bildet im Zwischenbereich einen thermischen Kontakt mit der Wandung zumindest einer, vorzugsweise beider Batteriezellen aus, zwischen denen es angeordnet ist. Das Verbindungselement befindet sich somit zwischen zwei einander zugewandten Seitenwänden von benachbarten Batteriezellen des Batteriemoduls und liegt vorzugsweise an beiden Seitenwänden der beiden Batteriezellen an. Ferner ist das Seitenteil, an dem das wärmeleitfähige Element thermisch kontaktiert ist, thermisch mit dem Kühlkörper gekoppelt.

Erfindungsgemäß wird somit zumindest eines der beiden Seitenteile der Haltestruktur genutzt, um seitlich Wärme aus dem Batteriemodul herauszuleiten und über das entsprechende Seitenteil dem Kühlkörper zuzuführen. Dadurch wird die im Betrieb entstehende Wärme der Batteriezellen nicht nur von oben nach unten zum Kühlkörper geleitet, sondern die Wärme wird zum Teil auch seitlich aus dem Batteriemodul herausgeleitet und über die Seitenteile der Haltestruktur dem Kühlkörper zugeführt. Dadurch kann der bei hohen Leistungsanforderungen entstehende starke Temperaturgradient hin zur Kühlplatte verkleinert werden. Ein besonderer Vorteil ist, dass hierzu die bestehenden Seitenteile der Haltestruktur genutzt werden, die neben der bisherigen Haltefunktion und mechanischen Schutzfunktion nun ferner als Wärmeableiteelement genutzt werden. Vorzugsweise erstreckt sich das Verbindungselement an beiden Seiten des Batteriemoduls aus dem Zwischenbereich heraus und ist an beiden Seitenteilen thermisch kontaktiert, wodurch eine besonders effiziente Wärmeableitung erzielt werden kann.

Gemäß einer besonders bevorzugten Ausführungsform weist ein aus dem Zwischenbereich herausragender Abschnitt des Verbindungselements, mittels dessen das Verbindungselement an einem der Seitenteile angebracht ist, eine geknickte oder gebogene Kante auf. Die Kante bildet eine flächige Anlage an das Seitenteil und verbessert somit die thermische Kontaktierung. Vorzugsweise ist die Kante als rechtwinklig geknickte oder gebogene Kante ausgebildet.

Das wärmeleitfähige Verbindungselement ist eine Wärmeleitfolie, beispielsweise eine Silikonwärmeleitfolie. Eine Wärmeleitfolie ermöglicht einerseits eine effiziente Wärmeableitung, beansprucht andererseits kaum zusätzlichen Bauraum, so dass das zusätzliche Einbringen der Wärmeleitfolie die Abmessungen des bisherigen Batteriemoduls nicht oder nur unwesentlich vergrößert. Die Wärmeleitfolie kann im Zwischenbereich mit der Wandung zumindest einer Zelle verklebt sein, um die Wärmeleitfolie gegen ein Verrutschen zu sichern. Neben einer Verklebung kann die Wärmeleitfolie jedoch auch mit einer anderen geeigneten kraftschlüssigen oder stoffschlüssigen Methode im Zwischenbereich an der Wandung zumindest einer Zelle angebunden werden. Ferner besteht im Rahmen der Erfindung die Möglichkeit, dass die Wärmeleitfolie im Zwischenbereich von den gegenüberliegenden Wänden der zwei benachbarten Zellen lediglich eingeklemmt ist. Das Wärmeleitelement kann auch als weiche Metallfolie vorgesehen sein, sofern hierdurch kein weiteres galvanisches Potenzial gegenüber dem Zellmodul entsteht. Gemäß einer alternativen Ausführungsform kann das wärmeleitfähige Verbindungselement ein Wärmeleitblech sein.

Ein besonderer Vorzug der Erfindung liegt darin, dass auch bereits vormontierte Batteriemodule nachgerüstet werden können. Eine Möglichkeit besteht darin, das Batteriemodul abzukühlen, beispielsweise auf die vom Hersteller vorgegebene Minimaltemperatur für eine Lagerhaltung der Batterie. Im gekühlten Zustand erfolgt eine leichte Kontraktion der Batteriezellen, so dass sich die Abstände zwischen zwei benachbarten Batteriezellen und somit die zwischen zwei benachbarten Batteriezellen ausgebildeten Zwischenbereiche vergrößern. In diesem Zustand kann das wärmeleitfähige Element, z. B. die Wärmeleitfolie, in einen oder mehrere der Zwischenbereiche eingebracht werden. Bei Erwärmung und Wiederausdehnung der Batteriezellen wird das wärmeleitfähige Element dann zwischen zwei Batteriezellen eingespannt.

Ferner ist es vorteilhaft, wenn das Wärmeleitelement komprimierbar ist. Dies bietet den Vorteil, dass eine Ausdehnung und/oder Kontraktion der Batteriezellen aufgrund der elektrischen Zyklisierung besser ausgeglichen werden kann. Gemäß einer weiteren vorteilhaften Ausführungsform ist das Seitenteil, an dem das wärmeleitfähige Element thermisch kontaktiert ist, über ein zweites Wärmeleitpad, das zwischen einer Unterseite des Seitenteils und dem Kühlkörper angeordnet ist, thermisch mit der Kühlplatte gekoppelt. Gemäß einer weiteren Variante dieser Ausführungsform kann das Seitenteil, an dem das wärmeleitfähige Element thermisch kontaktiert ist, an seinem unteren Ende eine rechtwinklige Kante aufweisen, die an einer Unterseite des Batteriemoduls anliegt, wobei sich das zweite Wärmeleitpad unterhalb von und längs der rechtwinkligen Kante und seitlich vom ersten Wärmeleitpad erstreckt. Folglich weist somit das zweite Wärmeleitpad gemäß dieser Variante eine geringere Dicke als das erste Wärmeleitpad auf. Falls das wärmeleitfähige Element an beiden Seitenteilen thermisch kontaktiert ist, ist vorzugsweise unterhalb jeder der beiden Seitenteile jeweils ein derartiges zweites Wärmeleitpad angeordnet.

Es ist nicht erforderlich, dass sich das Verbindungselement bis zur Unterseite des Batteriemoduls erstreckt und/oder dass das Verbindungselement das erste Wärmeleitpad an der Unterseite des Batteriemoduls direkt kontaktiert. Vielmehr sieht eine weitere vorteilhafte Möglichkeit der erfindungsgemäßen Realisierung vor, dass sich das Verbindungselement nicht bis zur Unterseite des Batteriemoduls erstreckt. Beispielsweise kann das Verbindungselement nur in einer oberen Hälfte des Zwischenbereichs angeordnet sein, d. h., das Verbindungselement ist nur an einer von der Kühlplatte abgewandten Hälfte der Batteriezelle mit der Wandung zumindest einer der beiden, vorzugsweise beider an den Zwischenbereich angrenzenden Batteriezellen thermisch verbunden. Gemäß dieser Realisierung wird hauptsächlich die hohe Wärme im oberen Bereich der Batteriezellen zur Seite hin abgeführt.

Gemäß einer alternativen Ausführungsform erstreckt sich das Verbindungselement auch an einer Unterseite des Batteriemoduls aus dem Zwischenbereich heraus und kontaktiert dort das erste Wärmeleitpad zur Ausbildung eines thermischen Kontakts. Gemäß dieser alternativen Ausführungsform verbessert das eingebrachte wärmeleitende Element sowohl die Wärmeableitung nach unten als auch die Wärmeableitung zur Seite hin.

Um eine möglichst hohe Wärmeleitfähigkeit zu erzielen, kann in jedem der zwischen zwei benachbarten Batteriezellen ausgebildeten Zwischenbereiche ein wärmeleitfähiges Element angeordnet sein, das sich aus dem Zwischenbereich heraus bis zu zumindest einem der Seitenteile der Haltestruktur erstreckt und an diesem thermisch kontaktiert ist.

Alternativ kann jedoch ein Verbindungselement nur in denjenigen Zwischenbereichen angeordnet sein, die an einer Batteriezelle angrenzen, die eine im Vergleich zu den restlichen Batteriezellen überdurchschnittlich hohe Wärmeentwicklung aufweist. Beispielsweise kann ein Verbindungselement nur in denjenigen Zwischenbereichen angeordnet sein, die an eine Batteriezelle angrenzen, an der ein Pol des Batteriemoduls ausgebildet ist, da die Wärmeentwicklung an den Polstellen überdurchschnittlich hoch ist und somit die dort angeordneten Batteriezellen überdurchschnittlich stark altern. Durch das gezielte Anbringen der Verbindungselemente an die Seitenwände derjenigen Batteriezellen, die einer höheren Wärmeentwicklung ausgesetzt sind, kann eine schnellere Alterung dieser Zellen vermieden oder zumindest reduziert werden.

Zusätzlich oder alternativ kann die Alterung auch dadurch reduziert werden, dass die Anbindungsfläche des im Zwischenbereich vorgesehenen wärmeleitfähigen Elements an die Wandung der Batteriezellen mit überdurchschnittlich hoher Wärmeentwicklung im Vergleich zu der Anbindung an die restlichen Batteriezellen vergrößert wird. Gemäß dieser Variante umfasst die Kraftfahrzeugbatterie beispielsweise ein erstes wärmeleitfähiges Verbindungselement, das an einer Batteriezelle thermisch angebunden ist, die einen Pol des Batteriemoduls ausbildet, und ein zweites Verbindungselement, das an einer Batteriezelle thermisch angebunden ist, die keinen Pol des Batteriemoduls ausbildet. Hierbei ist eine Anbindungsfläche des ersten Verbindungselements zur thermischen Kontaktierung an der Wandung der Batteriezelle größer als die Anbindungsfläche des zweiten Verbindungselements.

Die Seitenteile der Haltestruktur sind aus einem wärmeleitfähigen Material gefertigt, vorzugsweise aus einem metallischen Werkstoff, wie beispielsweise Aluminium. Im Gegensatz zu den in Figur 1 gezeigten bekannten Seitenteilen ist es vorteilhaft, die Seitenteile der erfindungsgemäßen Haltestruktur ohne Lochung oder Ausnehmung auszuführen. Stattdessen können die Seitenteile mit einer durchgängigen Fläche zur Abdeckung der Batteriezellen ausgeführt sein, wodurch der Wärmeabtransport verbessert wird.

Die Erfindung betrifft ferner ein Kraftfahrzeug, insbesondere ein Nutzfahrzeug mit einer Kraftfahrzeugbatterie, wie in diesem Dokument offenbart. Die zuvor beschriebenen bevorzugten Ausführungsformen und Merkmale der Erfindung sind beliebig miteinander kombinierbar.

Weitere Einzelheiten und Vorteile der Erfindung werden im Folgenden unter Bezug auf die beigefügten Zeichnungen beschrieben. Es zeigen:
- Figur 1: eine perspektivische Explosionsdarstellung einer aus dem Stand der Technik bekannten Kraftfahrzeugbatterie;
- Figur 2: eine schematische Darstellung des Einbringens einer Wärmeleitfolie in den zwischen zwei benachbarten Batteriezellen ausgebildeten Zwischenbereich gemäß einer Ausführungsform der Erfindung; und
- Figur 3: eine schematische Darstellung einer Frontansicht der Kraftfahrzeugbatterie gemäß einer Ausführungsform der Erfindung.

Gleiche oder funktional äquivalente Elemente sind in allen Figuren mit denselben Bezugszeichen bezeichnet und werden nicht gesondert beschrieben.

Der Grundaufbau der Kraftfahrzeugbatterie gemäß einem Ausführungsbeispiel der Erfindung entspricht dem in Figur 1 gezeigten Aufbau, so dass nachfolgend nur die Besonderheiten der Weiterbildung der Kraftfahrzeugbatterie erläutert werden.

Im Unterschied zu dem in Figur 1 gezeigten Aufbau sind in die beiden Seitenteile 6 keine Ausnehmungen 6d eingebracht. Die Seitenteile 6 weisen vielmehr eine durchgehende Abdeckfläche auf. Ferner entfällt die in Figur 1 gezeigte Papierschicht 15.

Eine weitere Besonderheit liegt darin, dass im Unterschied zum Aufbau der Figur 1 nunmehr eine Wärmeleitfolie 5 in die Zwischenbereiche 4, die jeweils zwischen zwei benachbarten Batteriezellen 3 ausgebildet ist, eingebracht wird.

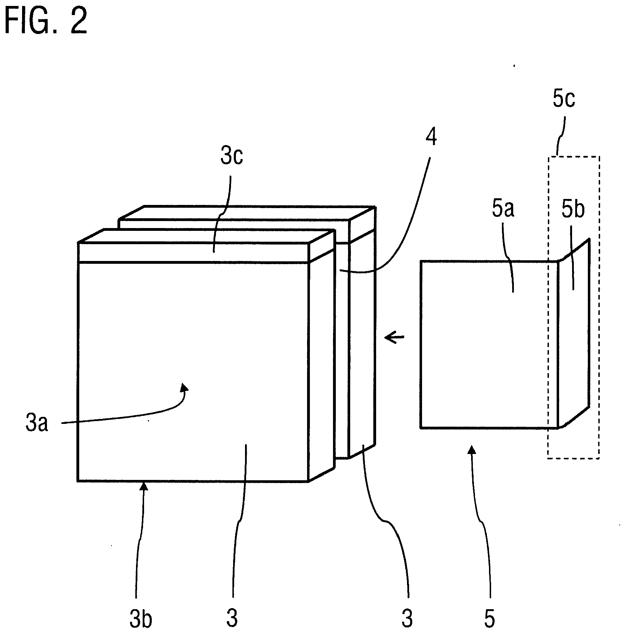

Dies ist in Figur 2 in einer stark schematisierten Darstellung illustriert. Figur 2 zeigt exemplarisch zwei der zwölf Batteriezellen 3 des Batteriemoduls 2. In den Zwischenbereich 4 zwischen den beiden Batteriezellen 3 wird eine Wärmeleitfolie 5 eingebracht, wobei der Abschnitt 5a der Wärmeleitfolie mit den Seitenwänden 3a der Batteriezelle, die an den Zwischenbereich 4 angrenzen, verklebt wird. Die Wärmeleitfolie 5 ist so dimensioniert und im Zwischenbereich 4 angebracht, dass sie aus dem Zwischenbereich 4 mit einem Abschnitt 5c herausragt. Der aus dem Zwischenbereich herausragende Abschnitt 5c der Wärmeleitfolie 5 weist eine geknickte oder gebogene Kante 5b auf, die sich somit parallel zur Längsrichtung des Seitenteils 6 erstreckt. Die geknickte Kante 5b bildet eine flächige Anlage zum Seitenteil 6 aus und wird an der Kante 5b mit dem Seitenteil 6 verklebt.

Die Wärmeleitfolie 5 ist komprimierbar, so dass Ausdehnungen oder Kontraktionen der Batteriezellen 3 im Betrieb ausgeglichen werden. Durch die in Figur 2 illustrierte Einbringung der Wärmeleitfolie 5 kann somit Wärme von den Batteriezellen 3 seitlich zum Seitenteil 6 der Haltestruktur herausgeleitet werden.

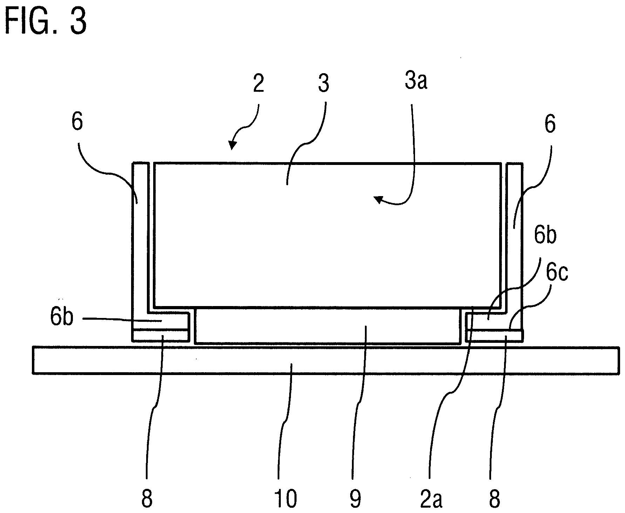

Figur 3 zeigt eine stark schematisierte Vorderansicht auf die Kraftfahrzeugbatterie gemäß einem Ausführungsbeispiel und illustriert die thermische Ankopplung der Seitenteile 6 an eine Kühlplatte 10. Zur Vereinfachung der Darstellung und zur Hervorhebung der thermischen Anbindung sind in Figur 3 die hierfür nicht benötigten konstruktiven Details der Batterie, wie beispielsweise die Elektronikeinheit 16, der Deckel 7 etc. weggelassen.

In Figur 3 ist nun zusätzlich die Kühlplatte 10, die sich unterhalb des Batteriemoduls 2 befindet und in eine Unterseite des Batteriegehäuses integriert ist, dargestellt. Zwischen der Kühlplatte 10 und einer Unterseite 2a des Batteriemoduls 2 ist ein erstes Wärmeleitpad 9 angeordnet, das das Batteriemodul 2 mit der Kühlplatte 10 thermisch koppelt. Die Seitenteile 6, die parallel zu den Seitenwänden des Batteriemoduls 2 an gegenüberliegenden Seitenwänden des Batteriemoduls 2 angeordnet sind, weisen an ihrem unteren Ende eine rechtwinklige Kante 6b auf. Die Kante 6b liegt an einer Unterseite 2a des Batteriemoduls an. Unterhalb dieser rechtwinkligen Kante 6b ist jeweils ein weiteres Wärmeleitpad 8 vorgesehen, das unterhalb von und längs der rechtwinkligen Kante und seitlich vom Wärmeleitpad 9 verläuft. Über die beiden zusätzlichen Wärmeleitpads 8 erfolgt die thermische Kontaktierung der Seitenteile 6 mit der Kühlplatte 10.

Die Dicke der Wärmeleitpads 8 zur thermischen Kopplung der Seitenteile 6 ist kleiner als die Dicke des Wärmeleitpads 9 zur direkten Kopplung der Batteriezellen 3 mit der Kühlplatte 10 und somit optimal an den verfügbaren Bauraum angepasst. Durch die Verschraubung des Zellmoduls mit dem Gehäuse über die Schraubhülsen 17 werden die Wärmeleitpads 8 und 9 zusammengedrückt und gleichen dabei eventuelle Unebenheiten aus.

Die thermische Kopplung der Batteriezellen 3 mit den Seitenteilen 6 über die zusätzlich vorgesehenen Wärmeleitfolien 5 ermöglicht somit, die Seitenteile 6 zusätzlich als Wärmesenkung zur Kühlung der Batterie zu nutzen. Ferner wird die Kühlleistung verbessert, ohne dass zusätzliche Kühlfinnen oder eine Kopf- oder Ableiterkühlung vorgesehen sein muss.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Kraftfahrzeugbatterie
- 2: Batteriemodul
- 2a: Unterseite des Batteriemoduls
- 3, 3.1-3.12: Batteriezelle
- 3a: Seitenwand
- 3c: Oberseite der Batteriezelle
- 4: Zwischenbereich
- 5: Wärmeleitfolie
- 5a: Im Zwischenbereich befindlicher Abschnitt der Wärmeleitfolie
- 5b: Außenkante
- 5c: Aus dem Zwischenbereich herausragender Abschnitt der Wärmeleitfolie
- 6: Seitenteil
- 6b: Rechtwinklige Kante des Seitenteils
- 6c: Unterseite des Seitenteils
- 7: Deckel
- 8: Zweites Wärmeleitpad
- 9: Erstes Wärmeleitpad
- 10: Kühlplatte
- 11: Minuspol des Batteriemoduls
- 12: Pluspol des Batteriemoduls
- 13, 14: Stirnteile des Gehäuses
- 15: Papierschicht
- 16: Elektronikeinheit
- 17: Verschraubungshülsen

## Patentansprüche

1. Kraftfahrzeugbatterie, umfassend
ein Batteriemodul (2), das mehrere stapelartig angeordnete Batteriezellen (3) aufweist,
eine das Batteriemodul (2) umgebende Haltestruktur, aufweisend zwei Seitenteile (6), die parallel zu den Seitenwänden eines solchen Stapels aus Batteriezellen (3) und an gegenüberliegenden Seitenwänden des Batteriemoduls (2) angeordnet sind;
einen unterhalb des Batteriemoduls (2) angeordneten Kühlkörper (10);
ein zwischen dem Kühlkörper (10) und einer Unterseite des Batteriemoduls (2) angeordnetes erstes Wärmeleitpad (9), das das Batteriemodul (2) mit dem Kühlkörper (10) thermisch koppelt;
wobei in mindestens einem der zwischen zwei benachbarten Batteriezellen (3) ausgebildeten Zwischenbereiche (4) ein wärmeleitfähiges Element (5) angeordnet ist, und das wärmeleitfähige Element eine Wärmeleitfolie (5) ist;
**dadurch gekennzeichnet,**
**dass** die Wärmeleitfolie (5) sich aus dem Zwischenbereich heraus bis zu zumindest einem der Seitenteile (6) der Haltestruktur erstreckt und an diesem thermisch kontaktiert ist; und
**dass** das Seitenteil (6), an dem das wärmeleitfähige Element (5) thermisch kontaktiert ist, thermisch mit dem Kühlkörper (10) gekoppelt ist; und
**dass** die Wärmeleitfolie (5) im Zwischenraum (4) a) mit der Wandung zumindest einer Zelle (3) verklebt ist; und/oder b) von den gegenüberliegenden Wänden der zwei benachbarten Zellen (3) eingeklemmt ist.

2. Kraftfahrzeugbatterie nach Anspruch 1, **dadurch gekennzeichnet, dass** ein aus dem Zwischenbereich (4) herausragender Abschnitt (5c) des wärmeleitfähigen Elements (5), mittels dessen das Verbindungselement an einem der Seitenteile angebracht ist, eine geknickte oder gebogene Kante (5b) aufweist.

3. Kraftfahrzeugbatterie nach einem der vorhergehenden Ansprüche, **dadurch gekennzeichnet, dass** das wärmeleitfähiges Element (5) komprimierbar ist.

4. Kraftfahrzeugbatterie nach einem der vorhergehenden Ansprüche, **dadurch gekennzeichnet, dass** das Seitenteil (6), an dem das wärmeleitfähige Element (5) thermisch kontaktiert ist, über ein zweites Wärmeleitpad (8), das zwischen einer Unterseite (6c) des Seitenteils (6) und dem Kühlkörper (10) angeordnet ist, thermisch mit dem Kühlkörper (10) gekoppelt ist.

5. Kraftfahrzeugbatterie nach Anspruch 4, **dadurch gekennzeichnet, dass** das Seitenteil (6), an dem das wärmeleitfähige Element (5) thermisch kontaktiert ist, an seinem unterem Ende eine rechtwinklige Kante (6b) aufweist, die an einer Unterseite (2a) des Batteriemoduls (2) anliegt, wobei sich das zweite Wärmeleitpad (8) unterhalb von und längs der rechtwinkligen Kante (6b) und seitlich vom ersten Wärmeleitpad (9) erstreckt.

6. Kraftfahrzeugbatterie nach einem der vorhergehenden Ansprüche, **dadurch gekennzeichnet, dass** das Verbindungselement
(a) nur in einer oberen Hälfte, d. h. in einer von dem Kühlkörper abgewandten Hälfte der Batteriezellen (3), des Zwischenbereichs (4) angeordnet ist; und/oder
(b) sich nicht bis zur Unterseite (2a) des Batteriemodules (2) erstreckt und/oder dass das Verbindungselement (3) das erste Wärmeleitpad (9) an der Unterseite (2a) des Batteriemoduls (2) nicht direkt kontaktiert.

7. Kraftfahrzeugbatterie nach einem der Ansprüche 1 bis 5, **dadurch gekennzeichnet, dass** das Verbindungselement sich an einer Unterseite (2a) des Batteriemoduls (2) aus dem Zwischenbereich heraus erstreckt und das erste Wärmeleitpad zur Ausbildung eines thermischen Kontakts kontaktiert.

8. Kraftfahrzeugbatterie nach einem der vorhergehenden Ansprüche, **dadurch gekennzeichnet, dass** in jedem der zwischen zwei benachbarten Batteriezellen ausgebildeten Zwischenbereiche (4) ein wärmeleitfähiges Element (5) angeordnet ist, das sich aus dem Zwischenbereich heraus bis zu zumindest einem der Seitenteile (6) der Haltestruktur erstreckt und an diesem thermisch kontaktiert ist.

9. Kraftfahrzeugbatterie nach einem der Ansprüche 1 bis 7, **dadurch gekennzeichnet, dass** ein Verbindungselement nur in denjenigen Zwischenbereichen (4) angeordnet ist, die an eine Batteriezelle angrenzen,
(a) an der ein Pol (11, 12) des Batteriemoduls (2) ausgebildet ist und/oder
(b) die eine im Vergleich zu den restlichen Batteriezellen überdurchschnittlich hohe Wärmeentwicklung aufweist.

10. Kraftfahrzeugbatterie nach einem der vorhergehenden Ansprüche, **gekennzeichnet durch** ein erstes Verbindungselement, das an einer Batteriezelle thermisch angebunden ist, die einen Pol des Batteriemoduls ausbildet, und ein zweites Verbindungselement, das an einer Batteriezelle thermisch angebunden ist, die keinen Pol des Batteriemoduls ausbildet, wobei eine Anbindungsfläche des ersten Verbindungselements zur thermischen Kontaktierung an der Wandung der Batteriezelle größer ist als die Anbindungsfläche des zweiten Verbindungselements.

11. Kraftfahrzeugbatterie nach einem der vorhergehenden Ansprüche, **dadurch gekennzeichnet,**
(a) **dass** die Seitenteile (6) der Haltestruktur aus einem wärmeleitfähigen Material gefertigt sind, vorzugsweise aus einem metallischen Werkstoff, wie beispielsweise Aluminium; und/oder
(b) **dass** die Haltestruktur als Rahmenstruktur und/oder Gehäuse ausgeführt ist, umfassend einen Deckel (7), ein erstes Stirnteil (13), das an einer ersten Stirnseite des Batteriemoduls (2) mit einem ersten Endbereich der Seitenteile mittelbar oder unmittelbar in Verbindung steht, und ein zweites Stirnteil (14), das an einer zweiten Stirnseite des Batteriemodules (2) mit einem zweiten Endbereich der Seitenteile (6) mittelbar oder unmittelbar in Verbindung steht.

12. Kraftfahrzeug, insbesondere Nutzfahrzeug, mit einer Kraftfahrzeugbatterie nach einem der Ansprüche 1 bis 11.

## Claims

1. Motor vehicle battery comprising
a battery module (2) that comprises multiple battery cells (3) that are arranged in a stacked manner,
a holding structure that surrounds the battery module (2), said holding structure comprising two side parts (6) that are arranged parallel to the side walls of such a stack of battery cells (3) and on opposite-lying side walls of the battery module (2);
a cooling body (10) that is arranged below the battery module (2);
a first thermally conductive pad (9) that is arranged between the cooling body (10) and an underside of the battery module (2), said thermally conductive pad thermally coupling the battery module (2) to the cooling plate (10);
wherein a thermally conductive element (5) is arranged in at least one of the intermediate regions (4) that are embodied between two adjacent battery cells (3), and the thermally conductive element is a thermally conductive sheet (5);
**characterized**
**in that** the thermally conductive sheet (5) extends out of the intermediate region as far as at least one of the side parts (6) of the holding structure and is thermally contacted on said side part; and
**in that** the side part (6) on which the thermally conductive element (5) is thermally contacted is thermally coupled to the cooling body (10); and
**in that** the thermally conductive sheet (5) in the intermediate space (4) a) is adhered to the wall at least of one cell (3); and/or b) is clamped by the opposite-lying walls of the two adjacent cells (3).

2. Motor vehicle battery according to Claim 1, **characterized in that** a section (5c) of the thermally conductive element (5) that protrudes out the intermediate region (4) comprises a bent or curved edge (5b) and the connecting element is attached to one of the side parts by means of said bent or curved edge.

3. Motor vehicle battery according to either of the preceding claims, **characterized in that** the thermally conductive element (5) can be compressed.

4. Motor vehicle battery according to any one of the preceding claims, **characterized in that** the side part (6) that is thermally contacted by the thermally conductive element (5) is thermally coupled to the cooling body (10) by way of a second thermally conductive pad (8) that is arranged between an underside (6c) of the side part (6) and the cooling body (10).

5. Motor vehicle battery according to Claim 4, **characterized in that** the side part (6) that is thermally contacted by the thermally conductive element (5) can comprise on its lower end a right-angled edge (6b) that lies against an underside (2a) of the battery module (2), wherein the second thermally conductive pad (8) extends below and along the right-angled edge (6b) and laterally from the first thermally conductive pad (9) .

6. Motor vehicle battery according to any one of the preceding claims, **characterized in that** the connecting element (5)
(a) is arranged only in one upper half of the intermediate region (4), in other words in a half of the battery cells (3) that is remote from the cooling body, and/or
(b) does not extend to the underside (2a) of the battery module (2) and/or that the connecting element (3) does not directly contact the first thermally conductive pad (9) on the underside (2a) of the battery module (2).

7. Motor vehicle battery according to any one of the Claims 1 to 5, **characterized in that** the connecting element extends at an underside (2a) of the battery module (2) out of the intermediate region and contacts the first thermally conductive pad so as to form a thermal contact.

8. Motor vehicle battery according to any one of the preceding claims, **characterized in that** a thermally conductive element (5) is arranged in each of the intermediate regions (4) that are embodied between two adjacent battery cells, said thermally conductive element extending out the intermediate region as far as at least one of the side parts (6) of the holding structure and is thermally contacted at said side part.

9. Motor vehicle battery according to any one of the Claims 1 to 7, **characterized in that** a connecting element is only arranged in the intermediate regions (4) that adjoin a battery cell,
(a) at which a pole (11, 12) of the battery module (2) is embodied and/or
(b) in which the build-up of heat is above average in comparison to the other battery cells.

10. Motor vehicle battery according to any one of the preceding claims, **characterized in that** a first connecting element that is thermally connected to a battery cell, said battery cell embodying a pole of the battery module, and a second connecting element that is thermally connected to a battery cell, said battery cell not embodying a pole of the battery module, wherein a connecting surface of the first connecting element for thermally contacting the wall of the battery cell is larger than the connecting surface of the second connecting element.

11. Motor vehicle battery according to any one of the preceding claims, **characterized in that**
(a) the side parts (6) of the holding structure are produced from a thermally conductive material, preferably from a metal material such as by way of example aluminium, and/or
(b) **in that** the holding structure is embodied as a frame structure and/or housing comprising a cover (7), a first end part (13) that is directly or indirectly connected at a first end face of the battery module (2) to a first end region of the side parts, and a second end part (14) that is directly or indirectly connected at a second end face of the battery module (2) to a second end region of the side parts (6).

12. Motor vehicle, in particular a commercial vehicle having a motor vehicle battery according to any one of the Claims 1 to 11.

## Revendications

1. Batterie de véhicule automobile comportant :
un module (2) de batterie qui présente plusieurs cellules (3) de batterie empilées les unes sur les autres,
une structure de maintien qui entoure le module (2) de batterie et qui présente deux parties latérales (6) disposées parallèlement aux parois latérales d'une pile de cellules (3) de batterie et sur des parois latérales opposées du module (2) de batterie,
un corps de refroidissement (10) disposé en dessous du module (2) de batterie,
un premier tampon thermiquement conducteur (9) qui est disposé entre le corps de refroidissement (10) et le côté inférieur du module (2) de batterie et qui couple thermiquement le module (2) de batterie avec le corps de refroidissement (10),
un élément thermiquement conducteur (5) disposé dans au moins une des parties intermédiaires (4) formées entre deux cellules (3) de batterie voisines, l'élément thermiquement conducteur étant une feuille thermiquement conductrice (5),
**caractérisée en ce que**
la feuille thermiquement conductrice (5) s'étend hors de la partie intermédiaire jusqu'à au moins l'une des parties latérales (6) de la structure de maintien et est en contact thermique avec elle,
**en ce que** la partie latérale (6) avec laquelle l'élément thermiquement conducteur (5) est en contact thermique est couplée thermiquement au corps de refroidissement (10) et
**en ce que** la feuille thermiquement conductrice (5) a) est collée dans l'espace intermédiaire (4) sur la paroi d'au moins une cellule (3) et/ou b) est serrée par les parois opposées de deux cellules (3) voisines.

2. Batterie de véhicule automobile selon la revendication 1, **caractérisée en ce qu'**une section (5c) de l'élément thermiquement conducteur (5) qui déborde hors de la partie intermédiaire (4) et au moyen de laquelle l'élément de liaison est placé sur l'une des parties latérales présente un bord (5b) coudé ou cintré.

3. Batterie de véhicule automobile selon l'une des revendications précédentes, **caractérisée en ce que** l'élément thermiquement conducteur (5) est compressible.

4. Batterie de véhicule automobile selon l'une des revendications précédentes, **caractérisée en ce que** la partie latérale (6) sur laquelle l'élément thermiquement conducteur (5) est en contact thermique est couplée thermiquement avec le corps de refroidissement (10) par l'intermédiaire d'un deuxième tampon thermiquement conducteur (8) disposé entre le côté inférieur (6c) de la partie latérale (6) et le corps de refroidissement (10).

5. Batterie de véhicule automobile selon la revendication 4, **caractérisée en ce que** la partie latérale (6) avec laquelle l'élément thermiquement conducteur (5) est en contact thermique présente à son extrémité inférieure un bord (6b) coudé à angle droit qui repose sur le côté inférieur (2a) du module (2) de batterie, le deuxième tampon thermiquement conducteur (8) s'étendant en dessous du bord (6b) coudé à angle droit élément de ce dernier, ainsi que latéralement par rapport au premier tampon thermiquement conducteur (9).

6. Batterie de véhicule automobile selon l'une des revendications précédentes, **caractérisée en ce que** l'élément de liaison
(a) est disposé uniquement dans la moitié supérieure de la partie intermédiaire (4), c'est-à-dire dans une moitié des cellules (3) de batterie non tournée vers le corps de refroidissement, et/ou
(b) s'étend uniquement jusqu'au côté inférieur (2a) du module (2) de batterie et/ou
**en ce que** l'élément de liaison (3) n'est pas en contact direct avec le premier tampon thermiquement conducteur (9) sur le côté inférieur (2a) du module (2) de batterie.

7. Batterie de véhicule automobile selon l'une des revendications 1 à 5, **caractérisée en ce que** l'élément de liaison s'étend hors de la partie intermédiaire sur le côté inférieur (2a) du module (2) de batterie et est en contact avec le premier tampon thermiquement conducteur de manière à former un contact thermique.

8. Batterie de véhicule automobile selon l'une des revendications précédentes, **caractérisée en ce que** dans chacune des parties intermédiaires (4) formées entre deux cellules de batterie voisines est disposé un élément thermiquement conducteur (5) qui s'étend hors de la partie intermédiaire jusqu'à au moins l'une des parties latérales (6) de la structure de maintien et est en contact thermique avec cette dernière.

9. Batterie de véhicule automobile selon l'une des revendications 1 à 7, **caractérisée en ce qu'**un élément de liaison est disposé uniquement dans la partie intermédiaire (4) adjacente à une cellule de batterie,
(a) sur laquelle est formé un pôle (11, 12) du module (2) de batterie et/ou
(b) qui présente un dégagement de chaleur plus élevé que le dégagement de chaleur moyen des autres cellules de batterie.

10. Batterie de véhicule automobile selon l'une des revendications précédentes, **caractérisée en ce qu'**un premier élément de liaison relié thermiquement à une cellule de batterie qui forme un pôle du module de batterie et un deuxième élément de liaison relié thermiquement à une cellule de batterie qui ne forme pas un pôle du module de batterie, une surface de liaison du premier élément de liaison servant à assurer le contact thermique avec la paroi de la cellule de batterie étant supérieur à une surface de liaison du deuxième élément de liaison.

11. Batterie de véhicule automobile selon l'une des revendications précédentes, **caractérisée en ce que**
(a) les parties latérales (6) de la structure de maintien sont réalisées en un matériau thermiquement conducteur, de préférence en un matériau métallique, par exemple l'aluminium et/ou
(b) **en ce que** la structure de maintien est configurée comme structure d'encadrement et/ou comme boîtier comprenant un couvercle (7), une premier partie frontale (13) qui est en contact direct ou indirect sur un premier côté frontal du module (2) de batterie avec une première partie d'extrémité des parties latérales et une deuxième partie frontale (14) qui est en contact direct ou indirect sur un deuxième côté frontal du module (2) de batterie avec une deuxième partie d'extrémité des parties latérales (6).

12. Véhicule automobile et en particulier véhicule utilitaire doté d'une batterie de véhicule automobile selon l'une des revendications 1 à 11.
